# EUROPÄISCHE PATENTANMELDUNG

(11) **EP 0 911 209 A2**
(43) Veröffentlichungstag der Anmeldung: **28.04.1999**
(21) Anmeldenummer: 98113635.1
(22) Anmeldetag: 22.07.1998
(51) Int. Cl.: B60N 2/22, B60N 2/44

(54) **Spindelantrieb zur Verstellung von Einstellpositionen eines Kraftfahrzeugsitzes**

(30) Priorität: 25.10.1997 DE 19747297
(71) Anmelder: Bertrand Faure Sitztechnik GmbH & Co. KG, D-31655 Stadthagen (DE)
(72) Erfinder: Deptolla, Bernd, 31712 Niedernwöhren (DE)
(74) Vertreter: Seewald, Jürgen, Dipl.-Ing.

(57) **Zusammenfassung**

Die vorliegende Erfindung betrifft einen Spindelantrieb zur Verstellung von Einstellpositionen eines Kraftfahrzeugsitzes, bestehend aus einer Gewindespindel (2) und einer Spindelmutter (3), die in mindestens einer Verstellrichtung gegen einen Endanschlag läuft. Bei derartigen, aus dem Stand der Technik bekannten Spindelantrieben besitzen die Spindelmuttern rechtwinklig zur Spindelachse angeordnete Stirnflächen, die auf parallele Gegenflächen der Endanschläge auflaufen. Dadurch kommt es zu einer starken Verkeilung der beiden Flächen bzw. zwischen der Gewindespindel und der Spindelmutter. Für das Lösen dieser Verkeilung ist ein großes Losbrechmoment erforderlich, welches durch die Antriebseinheit des Spindelantriebs aufgebracht werden muß. Aufgabe der Erfindung ist es, hier Abhilfe zu schaffen und für einen Spindelantrieb der eingangs genannten Art eine Lösung zur Verfügung zu stellen, die ein Verkeilen der Spindelmutter mit dem Endanschlag vermeidet. Gelöst wird diese Aufgabe dadurch, daß an der dem Endanschlag zugewandten Stirnfläche (7, 14) der Spindelmutter (3) eine Anschlagfläche (10) für den Endanschlag ausgebildet ist, die im wesentlichen rechtwinklig zur Steigung des Gewindes (15) verläuft, und daß der Endanschlag aus einem gewindespindelfesten, radial von der Gewindespindel (2) abragenden Vorsprung (11, 12) besteht, der beim Anliegen an der Anschlagfläche (10) zwängungsfrei mit der Stirnfläche (7, 14) der Spindelmutter (3) ist.

## Beschreibung

Die vorliegende Erfindung betrifft einen Spindelantrieb zur Verstellung von Einstellpositionen eines Kraftfahrzeugsitzes, bestehend aus einer Gewindespindel und einer Spindelmutter, die in mindestens einer Verstellrichtung gegen einen Endanschlag läuft.

Beispiele für derartige Spindelantriebe sind in EP-0-729 862 A1, DE 42 16 584 A1, DE 35 08 515 A1 sowie DE 37 22 856 A1 zu finden. Sie dienen der Sitz-Höhenverstellung, Sitz-Längsverstellung, Sitz-Neigungsverstellung` Kopfstützen-Höhenverstellung usw.

Bei den bekannten Spindelantrieben besitzen die Spindelmuttern rechtwinklig zur Spindelachse angeordnete Stirnflächen, die auf Endanschläge mit parallelen Gegenflächen auflaufen. Dadurch kommt es zu einer starken Verkeilung der beiden Flächen. Für das Lösen der Verkeilung ist ein großes Losbrechmoment erforderlich, für das die Motor-Getriebe-Einheit des Spindelantriebs ausgelegt werden muß. Dieses Losbrechmoment ist um ein Vielfaches größer als das für den Verstellbetrieb des Spindelantriebs erforderliche Drehmoment, d.h. die Motor-Getriebe-Einheit ist in bezug auf das normale Betriebs-Drehmoment des Spindelantriebs uberdimensioniert.

Aufgabe der vorliegenden Erfindung ist es, hier Abhilfe zu schaffen und für einen Spindelantrieb der eingangs genannten Art eine Lösung zur Verfügung zu stellen, die ein Verkeilen der Spindelmutter mit dem Endanschlag vermeidet.

Gelöst wird diese Aufgabe mittels eines Spindelantriebs mit den Merkmalen des Anspruchs 1. Aufgrund der erfindungsgemäßen Gestaltung der Anschlagflächen für die Endanschläge wird ein Verklemmen der Stirnflächen der Spindelmutter mit den Endanschlägen bzw. zwischen der Gewindespindel und der Spindelmutter vermieden. Infolge dessen genügt es, die Antriebseinheit auf das erforderliche Betriebs-Drehmoment des Spindelantriebs auszulegen, d.h. die Motor-Getriebe-Einheit kann im Vergleich mit dem Stand der Technik wesentlich geringer dimensioniert werden. Das ist ein wesentlicher Vorteil, da im Automobilbau Gewichts- und Platzeinsparungen eine bedeutende Rolle spielen.

Weitere vorteilhafte Ausgestaltungen der Erfindung ergeben sich aus den Unteransprüchen.

Die Erfindung wird nachstehend anhand von zwei Ausführungsbeispielen näher erläutert. In der dazugehörigen Zeichnung zeigt:
- Fig. 1: einen Spindelantrieb nach einem ersten Ausführungsbeispiel,
- Fig. 2: einen Blick auf den Spindelantrieb gemäß Fig. 1 von rechts,
- Fig. 3: einen Spindelantrieb nach einem zweiten Ausführungsbeispiel,
- Fig. 3.1: einen Schnitt A-A gemäß Fig. 3,
- Fig. 3.2: einen Schnitt B-B gemäß Fig. 3 und
- Fig. 4: einen Blick auf den Spindelantrieb gemäß Fig. 3 von rechts.

In den nachfolgenden Ausführungen werden, sofern die beiden Ausführungsbeispiele gleiche oder gleich wirkende Bauteile betreffen, gleiche Bezugszeichen verwendet.

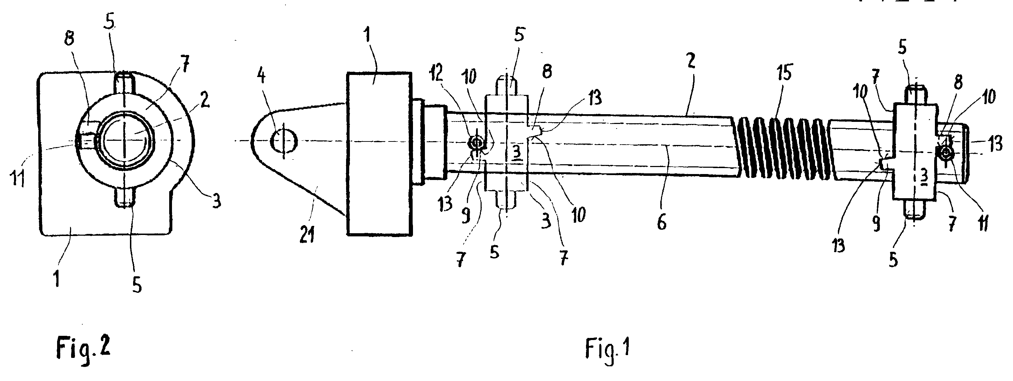

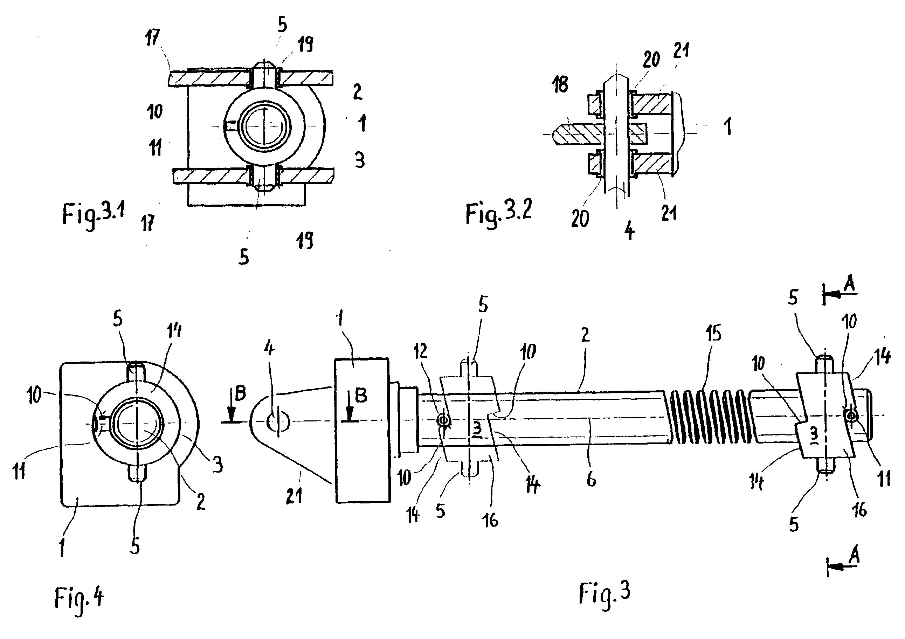

Die Figuren zeigen einen Spindelantrieb, bestehend auf einer Motor-Getriebe-Einheit 1, einer von dieser angetriebenen Gewindespindel 2 und einer Spindelmutter 3, welche auf dem Gewinde 15 der Gewindespindel 2 läuft. Diese Spindelmutter 3 ist in den Fig. 1 und 3 rechts mit starken Vollinien in einer ersten und links mit schwächeren Vollinien in einer zweiten Endanschlagstellung dargestellt. Sie besitzt zwei diametral von ihrem Umfang abragende Bolzen 5, mit denen sie an einem zu verstellenden Bauteil 17 (Fig. 3.1) des Sitzes festgelegt ist. Der Spindelantrieb ist über einen weiteren Bolzen 4 an ein Rahmenteil 18 (Fig. 3.2) eines Kraftfahrzeugsitzes angelenkt.

Im Ausführungsbeispiel gemäß den Figuren 1 und 2 besitzt die Spindelmutter 3 senkrecht zur Gewindespindelachse 6 angeordnete Stirnflächen 7. Von jeder der beiden Stirnflächen 1 ragt eine Querleiste 8, 9 in die jeweilige Verstellrichtung ab. Sie erstrecken sich vom Außenumfang bis zum Innenumfang der ringförmigen Stirnflächen 7 der Spindelmutter 3, wie am besten aus Fig. 2 hervorgeht. An den Querleisten 8, 9 ist eine Anschlagfläche 10 für Endanschläge ausgebildet. Diese Endanschläge bestehen aus radial von der Gewindespindel 2 abstehenden und mit dieser fest verbundenen, zylindrischen Anschlagbolzen 11 bzw. 12. In den in den Fig. 1 und 2 gezeigten Anschlagstellungen liegen die Anschlagbolzen 11, 12 mit Linienberührung an den Anschlagflächen 10 an, wie aus Fig. 2 in Verbindung mit Fig. 1 hervorgeht.

Die Anschlagflächen 10 sind in Verstellrichtung geneigt, und zwar mit einem Winkel von 90° zum Steigungswinkel des Gewindes 15. Dadurch ist gewährleistet, daß beim Anschlagen der Anschlagbolzen 11, 12 an die ihnen zugeordnete Anschlagfläche 10 nur Kräfte in Gewinde-Steigungsrichtung eingeleitet werden. Zwängungen zwischen den Gewinden der Gewindespindel 2 und der Spindelmutter 3 aufgrund von Kippmomenten werden dadurch vermieden.

Eine weitere, wesentliche Voraussetzung für die Lösung der eingangs gestellten Aufgabe besteht darin, daß verhindert werden muß, daß die Anschlagbolzen 11, 12 auf die Stirnflächen 7 der Spindelmutter 3 auflaufen, was zu einer Verkeilung zwischen den Anschlagbolzen 11 bzw. 12 und der Spindelmutter 3 führen würde. Diese Voraussetzung ist erfüllt, indem der Anschlagort zwischen den Querleisten 8, 9 und den Anschlagbolzen 11, 12 so gewählt ist, daß letztere zwängungsfrei mit den Stirnflächen 7 bleiben, d.h. , bevor die Anschlagbolzen 11, 12 auf die Stirnflächen 7 auflaufen können, schlagen sie an die Anschlagflächen 10 der Querleisten 8, 9 an.

Wie aus Fig. 1 hervorgeht, sind die Stirnflächen 13 der Querleisten 8, 9 geneigt. Ihr Neigungswinkel entspricht dem Steigungswinkel des Gewindes 15; sie verlaufen also parallel zur Gewindesteigung. Dadurch wird verhindert, daß die Anschlagbolzen 11, 12 auf die Stirnflächen 13 der Querleisten 8, 9 auflaufen. Natürlich wird dieser Zweck auch erfüllt, wenn der Neigungswinkel der Stirnflächen 13 größer als der Gewinde-Steigungswinkel ist.

In den Fig. 3 und 4 ist ein weiteres Ausführungsbeispiel gezeigt. Der einzige Unterschied zu dem vorstehend beschriebenen Ausführungsbeispiel besteht in einer anderen Gestaltung der Stirnflächen 14 der Spindelmutter 3. Diese Stirnflächen 14 sind einem Gewindegang mit der Steigung des Gewindes 15 nachempfunden, wobei die Umfangsfläche 16 der Spindelmutter 3 und die spiralförmigen Stirnflächen 14 rechtwinklig aufeinanderstehen. Aufgrund dieser Ausbildung der Stirnflächen 14 ergeben sich zurückspringende Anschlagflächen 10, die wie im vorherigen Ausführungsbeispiel und aus gleichem Grund im rechten Winkel zum Steigungswinkel des Gewindes 15 verlaufen. Die parallel zur Gewindesteigung angeordneten Stirnflächen 14 verhindern ein Auflaufen der Anschlagbolzen 11, 12. Gleiches wird auch mit einer größeren Steigung der Stirnflächen 14 erreicht.

Die Fig. 3.1 und 3.2 stellen Schnitte A-A bzw. B-B gemäß Fig. 3 dar. An dieser Stelle sei erwähnt, daß die geschnittenen Bauteile 17 und 18 in Fig. 3 der Übersicht halber weggelassen wurden. Aus Fig. 3.1 ist ersichtlich, daß sich die Bolzen 5 der Spindelmutter 3 über Gummibuchsen 19 an dem zu verstellenden Bauteil 17 abstützen. Auch der Bolzen 4 des Spindelantriebs ist gummigepuffert. Er durchsetzt, wie aus Fig. 3.2 hervorgeht, zwei zur Aufhängung des Spindelantriebs vorgesehene, parallel zueinander angeordnete Arme 21 der Motor-Getriebe-Einheit 1 sowie das zwischen diesen angeordnete Rahmenteil 18 des Kraftfahrzeugsitzes und ist jeweils über eine Gummibuchse 20 in den Armen 21 gelagert.

Die oben beschriebene Lagerung der Bolzen 5 und 4 in Gummibuchsen 19 bzw. 20 gewährleistet einen gedämpften Anschlag der Spindelmutter 3 an die Anschlagbolzen 11 bzw. 12. Natürlich kann eine derartige Dämpfung auch bei der Ausführung gemäß den Fig. 1 und 2 vorgesehen werden.

Die Spindelmuttern 3 der oben stehenden Ausführungsbeispiele können vorteilhaft als Druckgußteile hergestellt werden. Das Gewinde wird man in aller Regel schneiden.

Die aus den Ausführungsbeispielen hervorgehende Ausbildung der Spindelantriebe ermöglicht im Sinne der vorliegenden Erfindung klemmkraftfreie Endanschläge der Spindelmutter 3, so daß bei der Auslegung der Motor-Getriebe-Einheit 3 ein Losbrechmoment nicht berücksichtigt werden muß.

## Patentansprüche

1. Spindelantrieb zur Verstellung von Einstellpositionen eines Kraftfahrzeugsitzes, bestehend aus einer Gewindespindel und einer Spindelmutter, die in mindestens einer Verstellrichtung gegen einen Endanschlag läuft, dadurch gekennzeichnet, daß an der dem Endanschlag zugewandten Stirnfläche (7, 14) der Spindelmutter (3) eine Anschlagfläche (10) für den Endanschlag ausgebildet ist, die im wesentlichen rechtwinklig zur Steigung des Gewindes (15) verläuft, und daß der Endanschlag aus einem gewindespindelfesten, radial von der Gewindespindel (2) abragenden Vorsprung (11, 12) besteht, der beim Anliegen an der Anschlagfläche (10) zwängungsfrei mit der Stirnfläche (7, 14) der Spindelmutter (3) ist.

2. Spindelantrieb nach Anspruch 1, dadurch gekennzeichnet, daß die Stirnfläche (7) der Spindelmutter (3) in einem Winkel von 90° zur Spindelachse (6) angeordnet ist und die Anschlagfläche (10) an einem stirnflächenseitig abragenden Vorsprung (8, 9) ausgebildet ist.

3. Spindelantrieb nach Anspruch 1, dadurch gekennzeichnet, daß die Stirnfläche (14) der Spindelmutter (3) wendelförmig mit einer Steigung, die gleich oder größer als die Steigung des Gewindes (15) des Spindelantriebs ist, ausgebildet und die Anschlagfläche (10) als Rückversatz der Stirnfläche (14) ausgeführt ist..

4. Spindelantrieb nach einem der vorstehenden Ansprüche, dadurch gekennzeichnet, daß der Vorsprung (11, 12) als zylindrischer Anschlagbolzen ausgebildet ist.

5. Spindelantrieb nach einem der vorstehenden Ansprüche, dadurch gekennzeichnet, daß der Anschlag der Spindelmutter (3) an den Vorsprung (11, 12) elastisch gedämpft ist.
